# EUROPEAN PATENT SPECIFICATION

(11) **EP 3 236 128 B1**
(45) Date of publication and mention of the grant of the patent: **18.09.2019**
(21) Application number: 15870335.5
(22) Date of filing: 17.12.2015
(51) Int. Cl.: B60S 1/48, F16L 33/30, F16L 37/084, F16L 37/08, F16L 37/098, F16L 37/10

(54) **CONNECTOR FOR VEHICULAR HOSE CONNECTION**
VERBINDER FÜR EINE FAHRZEUGSCHLAUCHVERBINDUNG
RACCORD POUR LIAISON DE TUYAU SOUPLE DE VÉHICULE

(30) Priority: 17.12.2014 KR 20140182681
(43) Date of publication of application: 25.10.2017
(73) Proprietor: Nifco Korea Inc., Chungcheongnam-do 336-871 (KR)
(72) Inventor: DOH, Yoo Sung, Asan-si Chungcheongnam-do 336-871 (KR)
(74) Representative: Maiwald Patent- und Rechtsanwaltsgesellschaft mbH
(86) International application number: PCT/KR2015/013850
(87) International publication number: WO 2016/099168

(56) References cited:
- JP-A- H11 141 775
- JP-A- 2009 264 493
- KR-A- 20100 015 107
- KR-A- 20130 005 857
- KR-A- 20140 029 719
- US-A- 5 275 443
- US-A- 5 607 190

## Description

### Technical Field

The invention relates to a connector for vehicular hose connection, which connects hoses installed inside the engine compartment of a vehicle so as to carry a washer fluid. More specifically, the invention relates to a connector for vehicular hose connection, which is dividedly formed so as to be separated in a one-touch manner as necessary.

### Background Art

Normally, a hood of a vehicle is provided with a nozzle to spray a washer fluid to a windshield glass. Such a nozzle is fed with a washer fluid via a washer fluid hose from a washer fluid tank provided in the engine compartment.

Conventional vehicular washer fluid hose connection structure consists of a washer fluid hose that supplies a washer fluid from a washer fluid tank of a vehicle to a nozzle provided on a hood.

The washer fluid hose is made of flexible material and is secured on the bottom surface of the hood with a securing clip. In this vehicular washer fluid hose connection structure, the nozzle is provided outside an insulator installed on the bottom surface of the hood for noise reduction and better appearance.

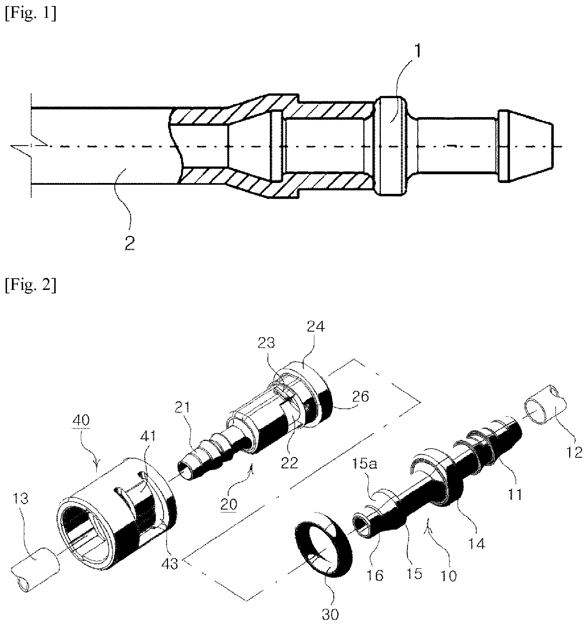

In particular, regarding a washer fluid hose that supplies a washer fluid from a washer fluid tank of a vehicle to a nozzle provided on the hood, the intermediate portion of the washer fluid hose (2) running between a weather strip provided in the engine compartment and the hood is separated into two parts, which are inserted into both ends of a connector (1) with high rigidity shown in Fig. 1 for their connection.

It is aimed to easily remove foreign matters by separating the hoses connected to the connector if foreign matters are caught inside the hoses during the use of the washer fluid.

The United States Patent US 5 607 190 A discloses a quick and leaktight joining device for tubular pipes having two tubular elements to be joined together, a device for locking in the joined condition, and a connection and/or locking telltale which can move between a first, visible, position and a second, concealed, position. Upon joining, one of the tubular elements to be joined and/or a locking device ensure(s) that the telltale is driven from the first, visible, position into the second, concealed, position. The quick and leaktight joining device is used, particularly in the motor industry for joining an engine cooling circuit to the water box of a unit heater or to the joining of a medium-pressure oil circuit of a motor vehicle power-assisted steering circuit.

[Patent Document 1] Korean Patent Laid-Open Publication No. 10-2010-0015107 (Laid-Open date: February 12, 2010)

### Disclosure of Invention

### Technical Problem

However, such a conventional connector for hose connection has one integral body such that they are inseparable. Accordingly, for repair such as removal of foreign matters introduced in a washer fluid hose, the washer fluid hose needs to be forcibly disconnected from the connector, which causes problems that it is difficult to recouple and seal the washer fluid hose.

The present invention has been conceived to solve the problems and has the purpose of allowing for easy separation and connection of the washer fluid hose by forming the connector itself, which connects the washer fluid hoses, to be separable in a one-touch manner.

### Solution to Problem

In order to solve the above problems, the present invention provides a connector for vehicular hose connection comprising: a sleeve having, at one end, a nipple, to which a hose is coupled, and a protruding annular stopper formed in the middle; a housing, in which the sleeve is accommodated, and which has a nipple coupled to another hose at one end of the housing, a through hole correspondingly formed in the outer circumferential surface of the housing, an enlarged protrusion on the outer circumferential surface adjacent to the through hole, and a flange formed on the opposite side of the nipple; an O-ring installed between the sleeve and housing so as to maintain airtightness therebetween; and a locker, which is rotatably coupled to the outer circumferential surface of the housing, has an elastic piece bending inwards so as to be positioned within the through hole of the housing and having a stopper protrusion for supporting one end of the protruding annular stopper formed on the sleeve, and integrates the sleeve and housing, wherein a guide protrusion is formed on the outer circumferential surface of the housing, and when the locker is coupled to the housing, the guide protrusion is stopped against one surface formed on a cutout of the locker to prevent the locker from leaving.

### Advantageous Effects of Invention

The present invention has a number of advantages stated below over conventional devices.

First, the present invention provides ease of use since the connector is dividedly formed as the housing and the sleeve, which are kept being coupled or separated by means of the locker.

Second, assembly and disassembly of the sleeve is convenient since the sleeve can be assembled by simply pushing it into the housing and be disassembled by rotating and pulling the locker.

Third, it is possible to maintain the perfect coupling state since the stopper protrusions formed on the two elastic pieces are stopped against the protruding annular stopper of the sleeve.

### Brief Description of Drawings

FIG. 1 is a partial cross-sectional view illustrating a state where a hose is connected to a conventional connector having one integral body.
FIG. 2 is an exploded perspective view showing the components of the present invention.
FIG. 3 is a perspective view of the state of FIG. 2 when coupled.
FIG. 4 is a perspective view of the locker of the present invention from the opposite side.
FIG. 5 is a front view showing the state where the sleeve is coupled to the housing of the present invention.
FIGs. 6a and 6b are cross-sectional views at the lines A-A and B-B of FIG. 5.
FIG. 7 is a front view showing the state where the locker of the present invention is rotated.
FIGs. 8a and 8b are cross-sectional views of the lines C-C and D-D of FIG. 7.
FIG. 9 is a perspective view showing the state where the locker of the present invention is coupled to the housing.
FIG. 10 is a longitudinal sectional view of the state where the O-ring is expanded.

### Best Mode for Carrying out the Invention

A detailed description is hereinafter provided for a person having ordinary skill in the technical field to which the present invention pertains to easily carry out the examples of the present invention by referring to the attached drawings. The present invention can be embodied in various different forms and is not limited to the examples described herein. It is hereby stated that the drawings are illustrated roughly and not in scale. Relative sizes and proportions of the portions in the drawings are exaggerated or reduced for clarity and convenience in the drawings. Any sizes are mere examples, not limitations. In addition, an identical structure, element or part shown in two or more drawings is referred to by the same reference numeral to indicate similar characteristics.

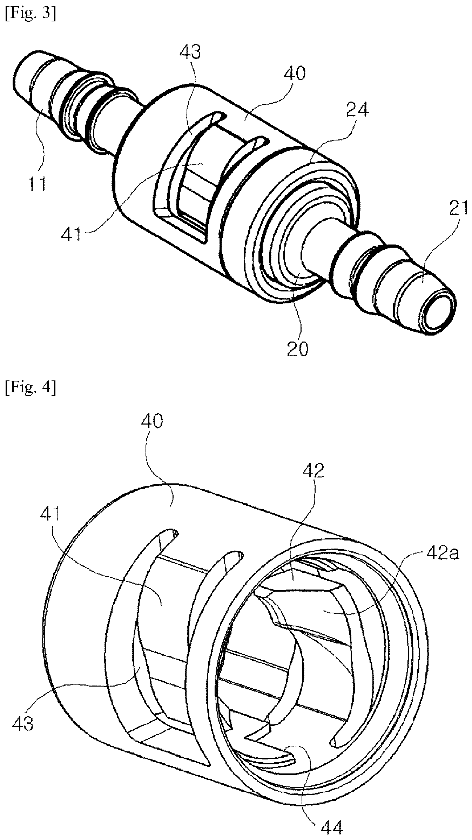

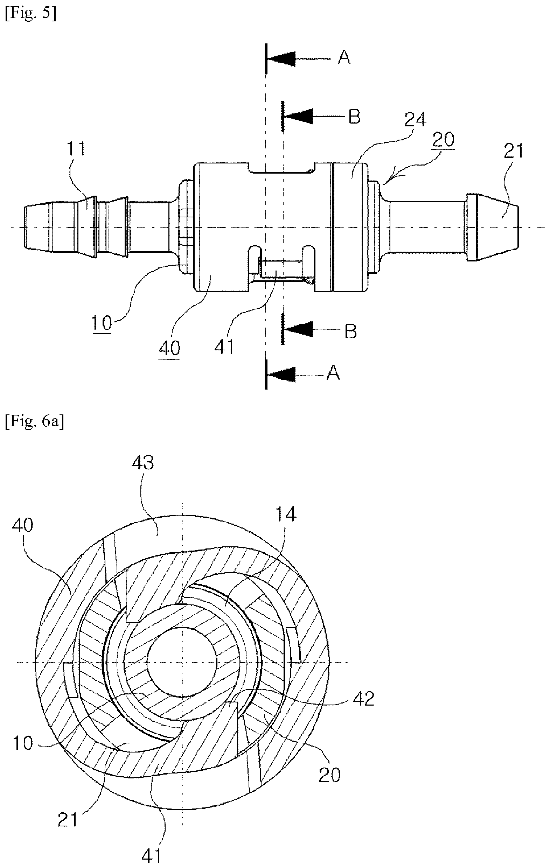

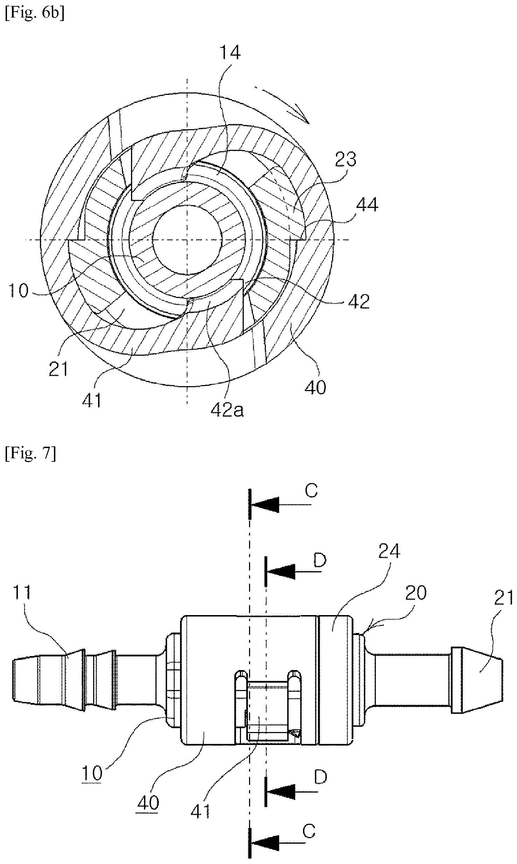

FIG. 2 is an exploded perspective view showing the components of the present invention, FIG. 4 is a perspective view of the locker of the present invention from the opposite side, and FIGs. 6a and 6b are cross-sectional views at the lines A-A and B-B of FIG. 5. Given the above, the present invention comprises a sleeve (10) having a nipple (11), to which a hose (12) is coupled; a housing (20) coupled to the sleeve and having at one end a nipple (21), to which another hose (13) is coupled; an O-ring (30) installed in the housing to maintain airtightness between the housing and the sleeve (10); and a locker (40) rotatably coupled to the housing (20) to maintain or release its coupling of the sleeve (10).

A protruding annular stopper (14) is formed in the middle of the sleeve (10). Through holes (22) are correspondingly formed in the housing (20), in which the sleeve is accommodated. Enlarged protrusions (23) are formed on the outer circumferential surface adjacent to the through hole. A flange (24) which prevents insertion of the locker (40) is formed on the opposite side of the nipple (21).

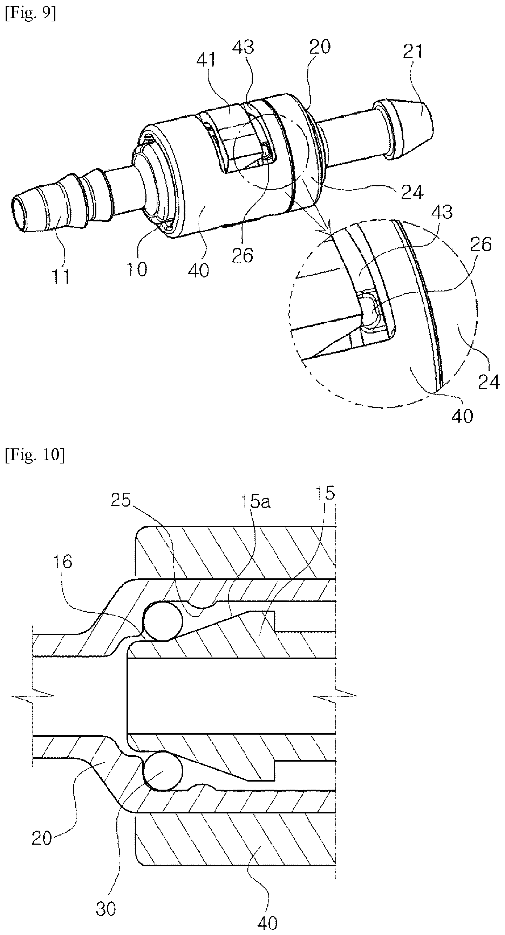

Additionally, an inclined projection (15) for expanding the O-ring (30), as in FIG. 10, to maintain absolute airtightness between the sleeve and the housing (20) is formed on the opposite side of the nipple (11) of the sleeve (10). It is preferable to further comprise a cylindrical guide portion (16) to be guided and inserted inside the O-ring (30).

In addition, forming an annular stepped stopper (25) inside the housing (20) for preventing the leaving of the O-ring (30) as in FIG. 10, has an advantage that, when the sleeve (10) is separated from the housing (20), a case is prevented where the O-ring (30) is dislodged along with the sleeve (10) because the O-ring (30) is stopped by the stepped stopper (25).

In the locker (40), elastic pieces (41) are correspondingly formed which are bending inwardly so as to be positioned within the housing through the through holes (22) formed on the housing (20) as in FIG. 6a, and the elastic piece (41) has, at its end, a stopper protrusion (42) for supporting one end of the protruding annular stopper (14) formed on the sleeve (10). On each stopper protrusion (42) formed on the elastic piece (41), an inclined surface (42a) upwardly sloping along a direction of insertion of the sleeve (10) is formed as shown in FIG. 4.

This is intended to allow the elastic piece (41) to be more easily enlarged as the sleeve (10) is coupled to the housing (20), while minimizing frictional resistance when the leading end of the sleeve (10) touches the stopper protrusion (42) of the elastic piece (41) positioned inside the housing (20) through the through hole (22) of the housing (20).

And, a guide protrusion (26) is formed on the outer circumferential surface of the housing (20) as in FIGs. 2 and 9, and when the locker (40) is coupled to the housing (20), the guide protrusion (26) is stopped against one surface formed on a cutout (43) of the locker (40) to prevent the locker (40) from leaving. The guide protrusion (26) also serves as a guide when the locker (40) rotates.

Additionally, a stepped stopper (44) for controlling the rotating of the locker (40) by coming into contact with a surface of the enlarged protrusion (23) is formed inside the locker (40) as in FIG. 6b. This is intended to allow for quick separation of the sleeve (10) from the housing (20) by controlling unnecessary excessive rotation of the locker (40).

The action of the present invention having the constitution above is explained as below.

First, when the connector of the present invention is assembled as in FIGs. 3 and 5, the guide protrusion (26) of the housing (20) is positioned in the cutout (43) formed on the locker (40) as in FIG. 9 to support one surface of the cutout (43). Accordingly, not only the locker (40) does not leave the housing (20) but the guide protrusion (26) serves as a guide when the locker (40) rotates.

Additionally, the stopper protrusions (42) of the locker (40) are stopped against the protruding annular stopper (14) of the sleeve (10), as shown in FIGs. 6a and 6b. Accordingly, the sleeve (10) is not separated from the housing (20) even when the sleeve (10) is pulled from the housing (20).

At this time, the stepped stopper (44) formed inside the locker (40) is in contact with the enlarged protrusion (23) as in FIG. 6b such that the locker (40) does not rotate counterclockwise.

In this state, in order to separate the sleeve (10) from the housing (20) as necessary, the locker (40) may be rotated in the direction indicated by the arrow in FIG. 6b to release the locked state of the sleeve (10), which allows separation of the sleeve (10) from the housing (20).

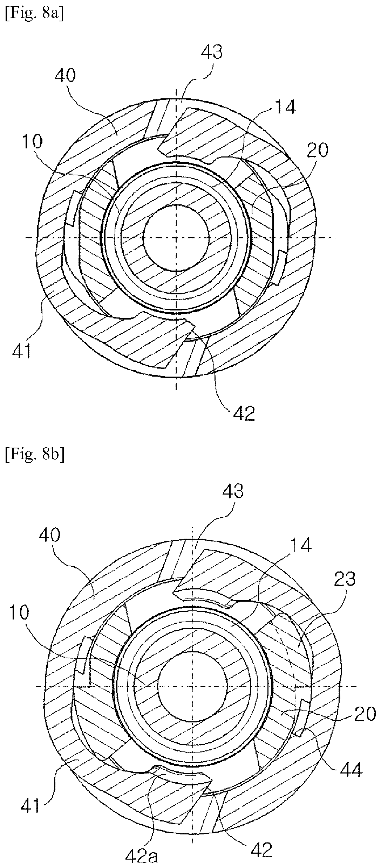

That is, the inner surface of the elastic piece (41) is in contact with the enlarged protrusion (23) while the elastic piece (41) bends inwardly as it extends towards the stopper protrusion (42); accordingly, as the locker (40) is rotated clockwise, the elastic piece (41) is deformed outward as in FIGs. 8a and 8b and, as a result, the stopper protrusion (42) is released from the protruding annular stopper (14) and the locking state of the sleeve (10) by the stopper protrusion (42) is released, which allows separation of the sleeve (10) from the housing (20).

Meanwhile, when the sleeve (10) is pushed into the housing (20) after the sleeve (10) had been separated from the housing (20) and the necessary actions had been taken, the cylindrical guide portion (16) formed at the leading end of the sleeve (10) passes through the O-ring (30) and, in a state of being supported, touches the stopper protrusion (42) of the locker (40) exposed inside the housing (20).

Since the upwardly sloping inclined surface (42a) is formed on the stopper protrusion (42), when the sleeve (10) is continued to be pushed in the state where the guide portion (16) is in contact with the stopper protrusion (42), the elastic piece (41) is initially deformed outward smoothly and, when the protruding annular stopper (14) touches the inclined surface (42a), the elastic piece (41) is further extended outward. When the protruding annular stopper (14) goes past the stopper protrusion (42), the elastic piece (41) contracts inward by restoring force and is stopped by the protruding annular stopper (14) of the sleeve (10) as in FIG. 6a., which completes the coupling of the connector.

An example of the present invention has been explained as above by referring to the attached drawings, but a person having ordinary knowledge in the technical field to which the present invention pertains could understand that the present invention could be embodied as other specific forms without changing its technical idea or essential characteristics.

Therefore, all aspects of the example described above should be understood as an example, not limitation. The scope of the present invention specified in the detailed description above is defined by the claims specified below.

### Brief Explanation of Reference Signs

| | | | |
|---|---|---|---|
| 10: | Sleeve, | 14: | Protruding annular stopper |
| 15: | Inclined projection, | 16: | Guide portion |
| 20: | Housing, | 22: | Through hole |
| 23: | Enlarged protrusion, | 26: | Guide protrusion |
| 30: | O-ring, | 40: | Locker |
| 41: | Elastic piece, | 42: | Stopper protrusion |
| 43: | Cutout, | 44: | Stepped stopper |

## Claims

1. A connector for vehicular hose connection, comprising:
a sleeve (10) having, at one end, a nipple (11), to which a hose (12) is coupled, and a protruding annular stopper (14) formed in the middle;
a housing (20), in which the sleeve is accommodated, and which has a nipple (21) coupled to another hose (13) at one end of the housing, a through hole (22) correspondingly formed in the outer circumferential surface of the housing, an enlarged protrusion (23) on the outer circumferential surface adjacent to the through hole, and a flange (24) formed on the opposite side of the nipple (21);
an O-ring (30) installed between the sleeve and housing so as to maintain airtightness therebetween; and
a locker (40), which is rotatably coupled to the outer circumferential surface of the housing, has an elastic piece (41) bending inwards so as to be positioned within the through hole of the housing and having a stopper protrusion (42) for supporting one end of the protruding annular stopper (14) formed on the sleeve, and integrates the sleeve (10) and housing (20),
wherein a guide protrusion (26) is formed on the outer circumferential surface of the housing (20), and when the locker (40) is coupled to the housing (20), the guide protrusion (26) is stopped against one surface formed on a cutout (43) of the locker (40) to prevent the locker (40) from leaving.

2. The connector according to claim 1, wherein an inclined surface (42a) upwardly sloping along a direction of insertion of the sleeve (10) is formed at each stopper protrusion (42) formed on the elastic piece (41) of the locker (40).

3. The connector according to claim 1, wherein an inclined projection (15) for expanding the O-ring (30) is formed on the opposite side of the nipple (11) of the sleeve (10), and when the sleeve (10) is coupled to the housing (20), the O-ring (30) is expanded by an inclined surface (15a) of the inclined projection (15).

4. The connector according to claim 3, wherein the leading end of the sleeve (10) further comprises a cylindrical guide portion (16) to be guided and inserted inside the O-ring (30).

5. The connector according to any one of claims 1, 3 and 4, wherein an annular stepped stopper (25) for preventing the leaving of the O-ring (30) is formed inside the housing (20)

6. The connector according to claim 1, wherein a stepped stopper (44) for controlling the rotating of the locker (40) by coming into contact with a surface of the enlarged protrusion (23) is formed inside the locker (40).

## Patentansprüche

1. Ein Verbinder für eine Fahrzeugschlauchverbindung, aufweisend:
eine Hülse (10), die an einem Ende einen Nippel (11) hat, an den ein Schlauch (12) angebunden ist, und einen in der Mitte ausgebildeten hervorstehenden ringförmigen Stopper (14);
ein Gehäuse (20), in dem die Hülse aufgenommen wird, und das einen mit einem weiteren Schlauch (13) verbundenen Nippel (21) an einem Ende des Gehäuses, ein Durchgangsloch (22), das entsprechend in der äußeren Umfangsfläche des Gehäuses ausgebildet ist, einen vergrößerten Vorsprung (23) auf der äußeren Umfangsfläche angrenzend an das Durchgangsloch, und einen auf der dem Nippel (21) gegenüber liegenden Seite ausgebildeten Flansch (24) hat;
einen O-Ring (30), der zwischen der Hülse und dem Gehäuse installiert ist um Luftdichtheit dazwischen zu erhalten; und
eine Schließvorrichtung (40), die drehbar mit der äußeren Umfangsfläche des Gehäuses verbunden ist, die ein elastisches Element (41) hat, das nach innen ragt um in dem Durchgangsloch des Gehäuses positioniert zu sein, und das einen Stoppervorsprung (42) hat, der sich an einem Ende des auf der Hülse ausgebildeten hervorstehenden ringförmigen Stoppers (14) abstützt, und die Hülse (10) und das Gehäuse (20) verbindet,
wobei ein Führungsvorsprung (26) auf der äußeren Umfangsfläche des Gehäuses (20) ausgebildet ist, und wenn die Schließvorrichtung (40) mit dem Gehäuse (20) verbunden ist, sich der Führungsvorsprung (26) gegen eine auf einem Ausschnitt (43) der Schließvorrichtung (40) ausgebildete Fläche abstützt, um die Schließvorrichtung (40) daran zu hindern sich zu lösen.

2. Der Verbinder gemäß Anspruch 1, wobei eine schräge Oberfläche (42a), die sich entlang einer Einführungsrichtung der Hülse (10) aufwärts neigt, auf jedem Stoppervorsprung (42) ausgebildet ist, der auf dem elastischen Element (41) der Schließvorrichtung (40) ausgebildet ist.

3. Der Verbinder gemäß Anspruch 1, wobei eine schräge Ausbuchtung (15) zum Erweitern des O-Rings (30) auf der dem Nippel (11) gegenüberliegenden Seite der Hülse (10) ausgebildet ist, und wenn die Hülse (10) mit dem Gehäuse (20) verbunden ist, ist der O-Ring (30) durch eine schräge Oberfläche (15a) der schrägen Ausbuchtung (15) erweitert.

4. Der Verbinder gemäß Anspruch 3, wobei das führende Ende der Hülse (10) weiterhin einen zylindrischen Führungsabschnitt (16) aufweist, um in dem O-Ring (30) geführt und eingeführt zu werden.

5. Der Verbinder gemäß einem der Ansprüche 1, 3 und 4, wobei ein ringförmig gestufter Stopper (25) innerhalb des Gehäuses (20) ausgebildet ist, um das Lösen des O-Rings (30) zu verhindern.

6. Der Verbinder gemäß Anspruch 1, wobei ein gestufter Stopper (44) zum Kontrollieren des Drehens der Schließvorrichtung (40) durch das in Kontakt Treten mit einer Oberfläche des vergrößerten Vorsprungs (23) innerhalb der Schließvorrichtung (40) ausgebildet ist.

## Revendications

1. Un connecteur pour le raccordement de tuyaux de véhicule, comprenant :
un manchon (10) ayant, à une extrémité, un embout (11), auquel un tuyau flexible (12) est relié, et une butée annulaire saillante (14) formé de façon médiane ;
un boîtier (20), dans lequel le manchon est reçu, et qui comporte un embout (21) relié à un autre tuyau flexible (13) à une extrémité du boîtier, un trou traversant (22) formé de manière correspondante dans la surface circonférentielle extérieure du boîtier, une saillie élargie (23) sur la surface circonférentielle extérieure adjacente au trou traversant, et une bride (24) formée sur le côté opposé à l'embout (21) ;
un joint torique (30) installé entre le manchon et le boîtier de manière à maintenir une étanchéité à l'air entre eux ; et
un organe de verrouillage (40), qui est relié de manière rotative à la surface circonférentielle extérieure du boîtier, présente une pièce élastique (41) repliée vers l'intérieur de manière à être positionnée dans le trou traversant du boîtier et ayant une saillie de butée (42) pour supporter une extrémité de la butée annulaire saillante (14) formée sur le manchon, et qui intègre le manchon (10) et le boîtier (20),
une saillie de guidage (26) est formée sur la surface circonférentielle extérieure du boîtier (20), et lorsque l'organe de verrouillage (40) est relié au boîtier (20), la saillie de guidage (26) est arrêtée contre une surface formée sur une découpe (43) de l'organe de verrouillage (40) de façon à empêcher que l'organe de verrouillage (40) ne se sépare.

2. Le connecteur selon la revendication 1, dans lequel une surface inclinée (42a) inclinée vers le haut le long d'une direction d'insertion du manchon (10) est formée à chaque saillie de butée (42) formée sur la pièce élastique (41) de l'organe de verrouillage (40).

3. Le connecteur selon la revendication 1, dans lequel une saillie inclinée (15) pour l'expansion du joint torique (30) est formée sur le côté opposé de l'embout (11) du manchon (10), et lorsque le manchon (10) est relié au boîtier (20), le joint torique (30) est élargi par une surface inclinée (15a) de la saillie inclinée (15).

4. Le connecteur selon la revendication 3, dans lequel l'extrémité avant du manchon (10) comprend en outre une partie de guidage cylindrique (16) destinée à être guidée et insérée dans le joint torique (30).

5. Le connecteur selon l'une quelconque des revendications 1, 3 et 4, dans lequel une butée étagée annulaire (25) pour empêcher la séparation du joint torique (30) est formée à l'intérieur du boîtier (20).

6. Le connecteur selon la revendication 1, dans lequel une butée étagée (44) est formé dans l'organe de verrouillage (40) pour commander la rotation de l'organe de verrouillage (40) en entrant en contact avec une surface de la saillie élargie (23).
